# FASCICULE DE BREVET EUROPEEN

(11) **EP 3 195 466 B1**
(45) Date de publication et mention de la délivrance du brevet: **21.02.2024**
(21) Numéro de dépôt: 15759879.8
(22) Date de dépôt: 31.07.2015
(51) Int. Cl.: H02P 27/08, H02P 25/022

(54) **PROCÉDÉ DE COMMANDE D'UN DISPOSITIF ONDULEUR ET DISPOSITIF DE COMMANDE ASSOCIE**
VERFAHREN ZUR STEUERUNG EINER UMRICHTERVORRICHTUNG UND ZUGEHÖRIGE STEUERUNGSVORRICHTUNG
INVERTER CONTROL METHOD AND ASSOCIATED APPARATUS

(30) Priorité: 01.09.2014 FR 1458162
(43) Date de publication de la demande: 26.07.2017
(73) Titulaire: Valeo Equipements Electriques Moteur, 94046 Créteil Cedex (FR)
(72) Inventeur: DUGUEY, Jean-François, 94230 Cachan (FR); ROUHANA, Najib, 60200 Compiegne (FR); SEMAIL, Eric, 59800 Lille (FR)
(74) Mandataire: Valeo Powertrain Systems
(86) Numéro de dépôt international: PCT/FR2015/052122
(87) Numéro de publication internationale: WO 2016/034785

(56) Documents cités:
- JP-A- 2011 061 950
- US-A1- 2008 116 840
- MAROUANI K ET AL: "Switching losses and harmonic currents evaluation of PWM techniques for VSI-fed dual stator induction motor drive", CONTROL AND AUTOMATION, 2009. MED '09. 17TH MEDITERRANEAN CONFERENCE ON, IEEE, PISCATAWAY, NJ, USA, 24 juin 2009 (2009-06-24), pages 1492-1497, XP031490313, ISBN: 978-1-4244-4684-1

## Description

La présente invention concerne le domaine des onduleurs et en particulier les onduleurs polyphasés destinés à alimenter, à partir d'une source de courant continu, une machine électrique tournante double triphasée, c'est-à-dire une machine comportant un stator avec deux enroulements triphasés décalés angulairement l'un par rapport à l'autre.

Il est connu dans l'état de la technique d'utiliser des machines ou moteurs double triphasé afin de réduire l'intensité des courants circulant dans les différentes phases du moteur, par exemple dans le cas de véhicules hybrides dont le moteur électrique a une puissance maximale pouvant varier de 5kW à 25kW.

Le document MAROUANI K ET AL, « Switching losses and harmonie currents évaluation of PWM techniques for VSLFed dual stator induction motor drive », CONTROL AND AUTOMATION, 2009, MED '09, 17TH MEDITERRENEAN CONFERENCE ON, IEEE, PISCATAWAY, NJ, USA, 24 juin 2009, pages 1492-1497, décrit une machine double triphasée et un procédé de commande d'un dispositif onduleur à six branches alimentant une machine double triphasée.

Le document JP 2011 061950 A décrit une méthode de réduction des oscillations dans la capacité de découplage de l'onduleur

Pour ces moteurs, la tension délivrée est généralement limitée à 48V car au-delà de cette tension, les contraintes de sécurité vis-à-vis des usagers sont beaucoup plus importantes. Avec un onduleur triphasé simple, le courant circulant dans les phases du moteur reste relativement élevé d'où l'idée d'utiliser un double triphasé de manière à réduire de moitié les courants traversant les phases du moteur.

Cependant, l'architecture double triphasé introduit des ondulations (« ripples » en anglais) de courant ou harmoniques supplémentaires au niveau des phases du moteur. Ces ondulations provoquent notamment des pertes par effet Joule et entraînent donc une détérioration du rendement du moteur.

Il apparaît donc nécessaire de trouver une solution pour réduire les ondulations de courant au niveau des phases d'un moteur double triphasé sans introduire d'autres pertes de manière à optimiser le rendement global du moteur.

Le but de la présente invention est donc de fournir un dispositif et un procédé de commande des onduleurs alimentant un moteur double triphasé permettant de réduire les ondulations de courant et de limiter les pertes au niveau des onduleurs.

La présente invention a donc pour objet un procédé de commande selon la revendication 1

Dans le cadre de la présente demande, on entend par « bloquer une branche » l'action consistant à maintenir les interrupteurs de la branche dans un état constant sur une période de la modulation à largeur d'impulsion.

Selon un autre aspect de la présente invention, la modulation à largeur d'impulsions dans laquelle les impulsions appliquées aux différentes branches sont centrées les unes par rapport aux autres est une modulation vectorielle barycentrique centrée.

Selon un aspect supplémentaire de la présente invention, le dispositif onduleur comprend un premier et un deuxième onduleur à trois branches alimentant respectivement les trois premiers et trois deuxièmes bobinages.

Selon un aspect supplémentaire de la présente invention, si aucune combinaison de commande ne permet de maintenir les interrupteurs de deux branches adjacentes dans un état constant sur une période de la modulation à largeur d'impulsion, on sélectionne et on applique la combinaison de commande permettant de maintenir dans un état constant sur une période de la modulation à largeur d'impulsion les interrupteurs de la branche alimentant les bobinages transmettant le courant le plus fort.

Selon un aspect additionnel de la présente invention, les premiers et les deuxièmes bobinages de la machine double triphasée sont décalés d'un angle électrique compris entre 15 et 45°. Cette caractéristique contribue à la limitation des ondulations de couple.

Selon un autre aspect de la présente invention, les premiers et les deuxièmes bobinages de la machine double triphasée sont décalés d'un angle de 30° électrique. Ainsi, les ondulations de couple sont annulées.

Selon un aspect additionnel de la présente invention, le procédé est mis en oeuvre seulement pour certains régimes moteur de la machine.

Selon un autre aspect de la présente invention, le procédé est mis en oeuvre pour les régimes moteur de la machine inférieurs à 5000 tours/min. En particulier, le procédé est mis en oeuvre lors des accélérations et des freinages d'un véhicule automobile, notamment hybride, dans lequel la machine double triphasée est installée.

Selon un aspect additionnel de la présente invention, une commande pleine onde est appliquée pour les régimes moteur supérieurs à 5000 tours/min.

Selon un aspect supplémentaire de la présente invention, la machine double triphasée est une machine installée dans un véhicule automobile hybride.

Selon un aspect supplémentaire de la présente invention, la machine fournit une puissance comprise entre 5 et 25 kW.

La présente invention concerne également un dispositif de commande d'un dispositif onduleur à six branches alimentant une machine double triphasée comprenant trois premiers bobinages et trois deuxièmes bobinages tel que divulgué par la revendication 11 annexée.

La présente invention concerne également un véhicule automobile comprenant :
- une machine double triphasée comprenant trois premiers bobinages et trois deuxièmes bobinages, un premier bobinage étant adjacent à un deuxième bobinage,
- un dispositif onduleur à six branches alimentant la machine,
- un dispositif de commande selon la revendication.

Le dispositif selon l'invention peut présenter l'une quelconque des caractéristiques décrites précédemment en relation avec le procédé selon l'invention.

D'autres caractéristiques et avantages de l'invention apparaîtront dans la description qui va maintenant en être faite, en référence aux dessins annexés qui en représentent, à titre indicatif mais non limitatif, des modes de réalisation possibles.

Sur ces dessins:
- les figures 1 et 2 représentent des schémas simplifiés d'un circuit électrique de commande d'une machine double triphasée ;
- la figure 3 représente un schéma électrique du circuit d'alimentation d'une machine double triphasée ;
- la figure 4 représente un exemple de commande MLI barycentrique centrée ;
- les figures 5a à 5d représentent les commandes dérivées de la commande de la figure 4 permettant de bloquer une branche du premier et du deuxième onduleur ;
- la figure 6 représente un organigramme des étapes du procédé de commande selon la présente invention ;
- la figure 7 représente un diagramme du couple fourni en fonction du régime moteur.

Sur ces figures, les mêmes numéros de référence désignent des éléments identiques.

Dans la description qui va suivre, on désigne de façon générale:
Le terme «MLI» correspond à l'acronyme Modulation à Largeur d'Impulsions et correspond à l'acronyme anglais PWM (Puise Width Modulation) ;
Le terme « MOSFET » correspond à l'acronyme anglais Metal Oxide Semiconduuctor Field Effect Transistor et correspond à un transistor à effet de champ à structure métal-oxyde-semiconducteur ;
Le terme « IGBT » correspond à l'acronyme anglais Insulated Gate Bipolar Transistor et correspond à un transistor bipolaire à grille isolée ;
Le terme « ASIC » correspond à l'acronyme anglais Application Spécifie Integrated Circuit et correspond à des circuits imprimés, notamment intégrés, pour une application spécifique ;
Le terme « FPGA » correspond à l'acronyme anglais Field Programmable Gate Array et correspond à un réseau de portes programmables in situ.

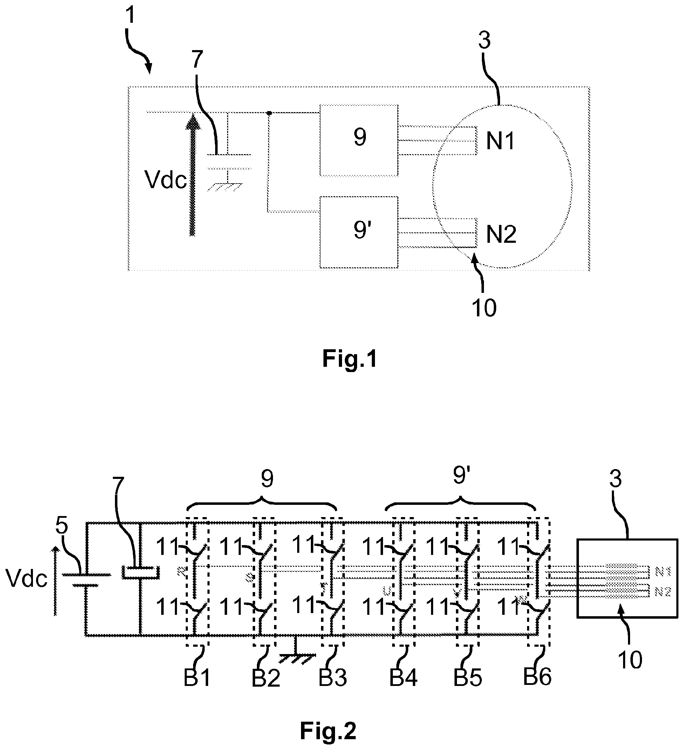

Les figures 1 et 2 représentent un circuit électrique 1 d'alimentation d'une machine ou moteur triphasé 3, par exemple d'un véhicule automobile, à partir d'une source de tension continu notée Vdc, généralement une batterie 5. Le circuit électrique 1 comprend un condensateur 7, dit condensateur de découplage, connectée entre la batterie 5 et un dispositif onduleur comprenant deux onduleurs 9 et 9' alimentant les phases 10 du moteur 3, les phases 10 alimentées par le premier onduleur 9 étant reliées à un premier noeud N1 et les phases 10 alimentées par le deuxième onduleur 9' étant reliées à un deuxième noeud N2.

Alternativement un unique onduleur à six branches peut également être utilisé en lieu et place des deux onduleurs 9 et 9' dans le cadre de la présente invention.

Les onduleurs 9 et 9' comprennent des éléments de commutation ou interrupteurs 11 répartis sur six branches notées B1, B2...B6. Chaque branche B1...B6 comprend un premier et un deuxième élément de commutation 11 séparés par un point milieu connecté à une phase 10. Les points milieux des branches B1, B2...B6 sont notés respectivement R, S, T, U, V et W de même que les phases ou bobinages 10 du moteur 3 associées à ces points milieux. Les éléments de commutation 11 sont par exemple réalisés par des transistors de type à effet de champ MOSFET ou des transistors bipolaires à grille isolée IGBT.

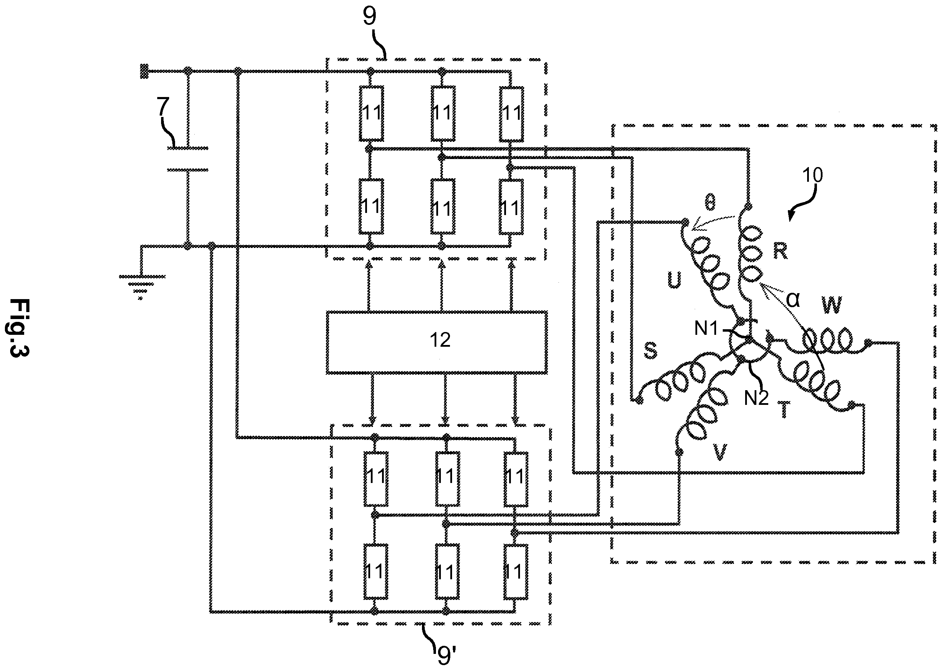

En pratique les trois phases reliées à un onduleur 9, 9' sont espacées d'un angle α de 120° comme représenté sur la figure 3. Les phases U, V et W associées au deuxième onduleur 9' sont décalées d'un angle électrique θ par rapport aux phases R, S et T associées au premier onduleur 9. L'angle électrique θ de décalage peut être choisi arbitrairement, cependant de manière à limiter les ondulations de couple, un angle compris entre 15 et 45° peut être choisi. De préférence, un angle de 30° est choisi pour permettre aux ondulations de couple de s'opposer et d'annuler leurs effets.

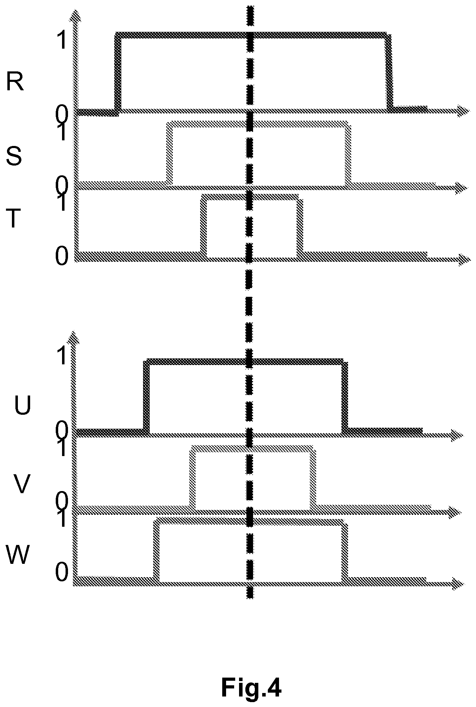

Le rôle des onduleurs 9 et 9' est de convertir la tension continue fournie par la batterie 5 en une tension alternative pour alimenter les phases 10, aussi appelées bobinages, du moteur 3. Pour cela, il convient de piloter, via des moyens de traitement et de commande 12, l'ouverture et la fermeture des éléments de commutation 11 pour obtenir le signal désiré en fonction du régime moteur. Pour les commandes à largeur d'impulsions, les éléments de commutation 11 d'une même branche sont dans un état opposé (quand l'un est ouvert, l'autre est fermé et inversement). Par exemple, on applique des commandes à largeur d'impulsions (MLI) et en particulier des commandes comprenant des impulsions centrées les unes par rapport aux autres sur les deux onduleurs 9 et 9' comme par exemple la commande MLI vectorielle barycentrique centrée représentée sur la figure 4. Les commandes de la figure 4 présentent des impulsions entre deux valeurs correspondant à un niveau bas noté 0 et un niveau haut noté 1. Le niveau haut d'une branche, par exemple la branche B1 associée au point milieu R, correspond à la fermeture de l'élément de commutation 11 de la branche relié à la borne positive de la batterie 5. Le niveau bas correspondant à l'ouverture de l'élément de commutation 11 de la branche relié à la borne positive de la batterie 5. La commande MLI vectorielle barycentrique centrée présente l'avantage d'être facile à implémenter car elle ne nécessite pas de programmation complexe comme les commandes séquentielles.

A partir de cette commande MLI vectorielle barycentrique centrée ou d'une autre commande dans laquelle les impulsions sont centrées les unes par rapport aux autres, une première optimisation est de faire varier la durée des impulsions des commandes pour chaque onduleur 9 et 9' de manière à bloquer l'une des branches de l'onduleur 9, 9', c'est-à-dire à mettre une branche dans un état stationnaire (toujours le même élément de commutation 11 de la branche en position ouverte) pour réduire les pertes par commutation.

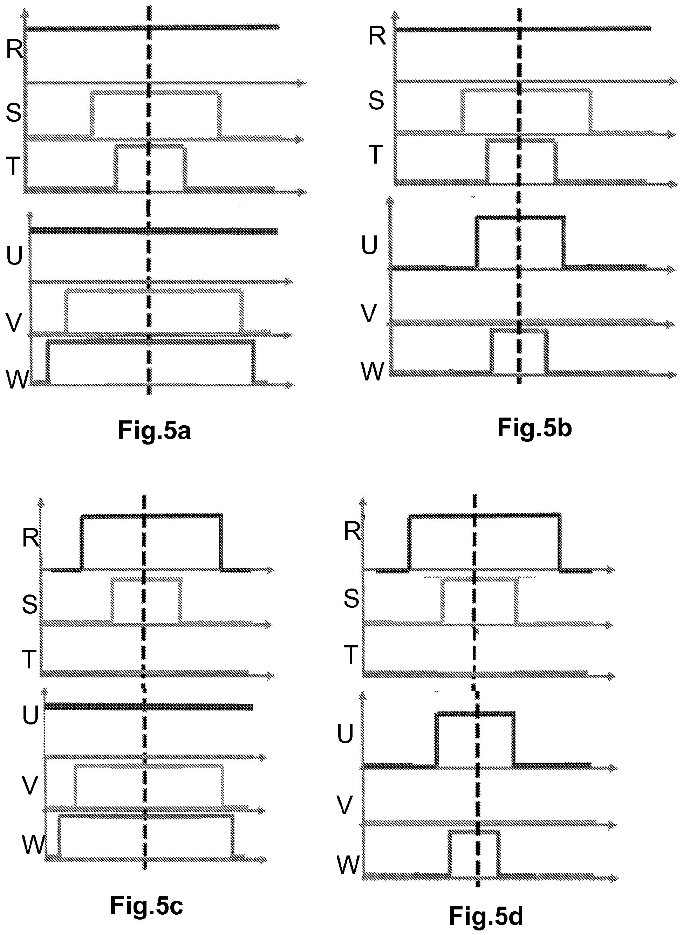

En effet, il est possible de conserver une commande en faisant varier la durée des impulsions tout en gardant le même rapport entre les temps au niveau haut et au niveau bas des différentes branches B1, B2...B6 de l'onduleur 9, 9'. Ainsi, pour une commande MLI vectorielle barycentrique donnée, plusieurs solutions peuvent conduire au blocage d'une branche B1, B2...B6, quatre dans le cas de l'exemple de la figure 4. En effet, en observant la figure 4, on déduit qu'il est possible, pour le premier onduleur 9, de bloquer la branche B1 associée au point milieu R en augmentant la largeur des impulsions comme représenté sur les figures 5a et 5b ou de bloquer la branche B3 associée au point milieu T en réduisant la largeur des impulsions comme représenté sur les figures 5c et 5d.

De la même manière, pour le deuxième onduleur 9', à partir de la figure 4 on observe que l'on peut bloquer la branche B4 associée au point milieu U en augmentant la largeur des impulsions comme représenté sur les figures 5a et 5c ou de bloquer la branche B5 associée au point milieu V en réduisant la largeur des impulsions comme représenté sur les figures 5b et 5d. On a donc quatre solutions permettant de bloquer une branche du premier onduleur 9 et une branche du deuxième onduleur 9' représentées sur les figures 5a à 5d. Ces quatre solutions permettant du fait du blocage de deux branches (une par onduleur) de réduire les pertes dues aux commutations des onduleurs 9 et 9'.

De plus, de manière à optimiser encore plus la commande vectorielle et réduire les ondulations de courant, les inventeurs ont observés que, lorsque cela est possible, il est avantageux de bloquer deux branches adjacentes. Par branches adjacentes, on entend une branche du premier 9 et du deuxième 9' onduleur dont l'angle électrique est minimal. Ainsi dans la présente configuration présentée sur la figure 3, il y a trois paires de branches adjacentes, la paire R-U, la paire S-V et la paire T-W. Or, parmi ces trois paires, seule la paire R-U est une paire blocable d'après les figures 5a à 5d. Ainsi, à partir de la commande MLI barycentrique centrée de la figure 4, l'optimisation de la présente invention aboutit à la commande de la figure 5a.

Par ailleurs, si aucune paire de branches adjacentes n'est blocable ou si plusieurs paires de branches adjacentes sont blocables, la paire dans laquelle le courant est le plus élevé est choisie.

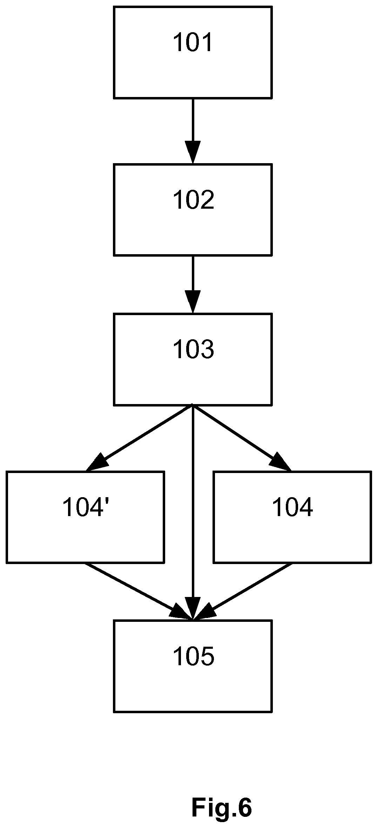

Les différentes étapes du procédé de l'invention vont maintenant être présentées à partir de la figure 6.

La première étape 101 correspond à la détermination d'une commande MLI barycentrique centrée ou d'une autre commande MLI dans laquelle les impulsions sont centrées les unes par rapport aux autres, correspondant au régime moteur désiré pour commander les temps d'ouverture et de fermeture des éléments de commutation 11 du premier 9 et du deuxième 9' onduleur.

La deuxième étape 102 correspond à la détermination, à partir de la MLI déterminée à l'étape 101, des combinaisons de branches blocables en augmentant ou en réduisant proportionnellement le temps des impulsions d'une part du premier onduleur 9 et d'autre part du deuxième onduleur 9'.

La troisième étape 103 correspond à la sélection, parmi les combinaisons de branches blocables des combinaisons permettant de bloquer deux branches adjacentes. Si aucune combinaison ne permet de bloquer deux branches adjacentes, on passe à l'étape 104' sinon on passe à l'étape 104.

La quatrième étape 104 est une étape facultative et correspond à la sélection, parmi les combinaisons sélectionnées à l'étape 103, de la combinaisons permettant de bloquer les branches adjacentes dans lesquelles l'intensité du courant traversant les branches est la plus importante.

L'étape 104' est également une étape facultative et correspond à la sélection de la combinaison permettant de bloquer la branche dans laquelle l'intensité du courant est la plus importante.

La cinquième étape 105 correspond à l'application de la ou de l'une des combinaisons sélectionnées. En effet, si l'on a appliqué l'étape 104 ou l'étape 104', il n'y a qu'une combinaison sélectionnée et c'est cette combinaison de commande qui est appliquée au premier 9 et au deuxième 9' onduleur tandis que si les étapes 104 ou 104' n'ont pas été appliquées, il peut y avoir plusieurs combinaisons sélectionnées et on applique l'une d'entre elles, le choix se faisant de manière arbitraire.

Ainsi, l'étape 104 permet d'optimiser encore la sélection de commande de manière à réduire encore plus les pertes au niveau des onduleurs 9 et 9'.

Dans le mode de réalisation alternatif où le dispositif onduleur comprend un onduleur à six branches, les éléments de commutation des trois premières branches associées aux trois premiers bobinages seront pilotées de la même manière que les éléments de commutation du premier onduleur 9 dans le mode de réalisation décrit précédemment et les éléments de commutation des trois autres branches associées aux trois deuxièmes bobinages seront pilotées de la même manière que les éléments de commutation du deuxième onduleur 9' dans le mode de réalisation décrit précédemment.

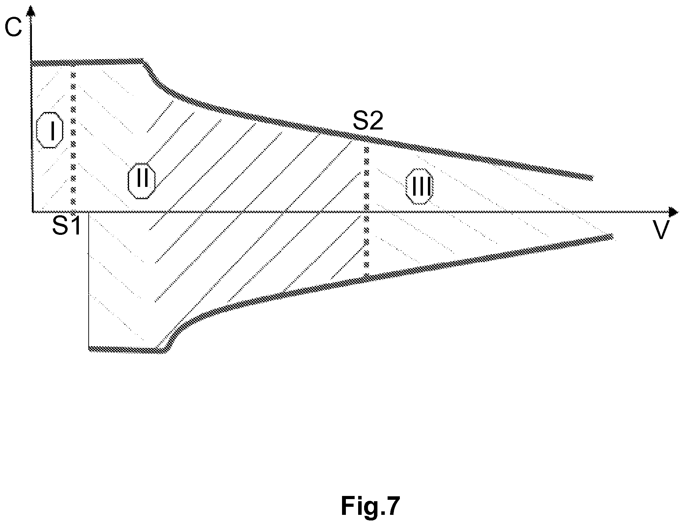

D'autre part, le procédé de commande décrit précédemment peut n'être appliqué que pour certains régimes moteurs. La figure 7 représente un diagramme du couple moteur ou couple machine C en fonction de la vitesse du rotor V. La partie située au-dessus de l'axe des abscisses représente le mode moteur tandis que la partie située sous l'axe des abscisses représente le mode générateur. Ainsi, on peut diviser la plage de régimes moteurs en trois parties : une première partie notée I correspondant aux régimes inférieurs à un premier seuil S1, par exemple 1000 tours/min ce qui correspond au démarrage et au ralenti moteur (régime obtenu au point mort du véhicule par exemple), une deuxième partie notée II comprise entre le premier seuil S1 et un deuxième seuil S2, par exemple 5000 tours/min correspondant par exemple à une accélération en mode moteur et à un freinage régénératif en mode générateur et une troisième partie notée III correspondant à des vitesses supérieures au seuil S2. Le procédé décrit précédemment est appliqué pour les régimes moteur de la première I et de la deuxième II partie tandis que pour les régimes moteur de la troisième partie III, une commande pleine onde est appliquée. En effet, les commandes MLI permettent de réduire les harmoniques, c'est-à-dire les ondulations de courant fourni au moteur 3. Cependant, les commandes MLI engendrent un nombre bien plus important de commutations au niveau du ou des onduleurs 9 et 9' que la commande pleine onde. Mais la commande pleine onde n'est appliquée qu'au-dessus d'une certaine vitesse de rotation machine, car la commande pleine onde génère des ondulations de courant importantes dans la machine, qui ne baissent que quand la vitesse machine augmente.

Les étapes du procédé présentées précédemment sont mises en oeuvre par des moyens de traitement et de commande 12 configurés pour les réaliser comme par exemple des composants logiques de type ASIC ou FPGA ou par un microcontrôleur voire par un microprocesseur. Ces moyens de traitement peuvent être situés au niveau des onduleurs 9 et 9' ou peuvent être déportés et connectés aux éléments de commutation 11 des onduleurs 9 et 9' de manière à piloter leur ouverture et leur fermeture selon la commande sélectionnée.

Ainsi, la sélection de commandes, à partir d'une commande MLI barycentrique centrée ou d'une commande MLI dans laquelle les impulsions appliquées aux différentes branches sont centrées les unes par rapport aux autres, permettant de bloquer les branches adjacentes des onduleurs 9 et 9' alimentant un moteur double triphasé 3 permet de réduire les ondulations de courant au niveau des phases 10 du moteur 3 tout en limitant les capacités de traitement nécessaires à la détermination d'une telle commande ce qui permet d'optimiser le rendement moteur pour un coût réduit, notamment par rapport à des commandes séquentielles nécessitant de puissants moyens de traitement et de mémorisation.

Notamment, lorsque l'on parle d'impulsions centrées les unes par rapport aux autres, on entend que les impulsions sont temporellement centrées les unes par rapport aux autres.

## Revendications

1. Procédé de commande d'un dispositif onduleur à six branches (B1, B2, B3 B4, B5, B6) alimentant une machine double triphasée (3) comprenant trois premiers bobinages (R, S, T) et trois deuxièmes bobinages (U, V, W), un premier bobinage (R, S, T) étant respectivement adjacent à un deuxième bobinage (U, V, W), le procédé comprenant les étapes suivantes :
- on détermine les commandes à appliquer aux branches du dispositif onduleur en fonction du point de fonctionnement désiré pour la machine (3) par une modulation à largeur d'impulsions,
- à partir des commandes déterminées, on détermine les commandes permettant de maintenir les interrupteurs d'au moins une branche (B1, B2, B3, B4, B5, B6) dans un état constant sur une période de la modulation à largeur d'impulsions en faisant varier de façon proportionnelle les largeurs d'impulsions des commandes associées aux trois premiers bobinages (R, S, T) et aux trois deuxièmes bobinages (U, V, W),
- les impulsions appliquées aux différentes branches sont centrées les unes par rapport aux autres,
ledit procédé étant **caractérisé en ce que** :
- on sélectionne les combinaisons de commandes permettant de maintenir les interrupteurs de deux branches adjacentes dans un état constant sur une période de la modulation à largeur d'impulsion,
- on applique l'une des combinaisons sélectionnées, et
si plusieurs combinaisons de commandes sont sélectionnées, on applique la combinaison de commande pour laquelle les branches adjacentes alimentent les bobinages (10) transmettant les courants les plus forts et on maintient leurs interrupteurs dans un état constant sur une période de la modulation à largeur d'impulsion.

2. Procédé selon la revendication 1, dans lequel la modulation à largeur d'impulsions dans laquelle les impulsions appliquées aux différentes branches sont centrées les unes par rapport aux autres, est une modulation vectorielle barycentrique centrée.

3. Procédé selon la revendication 1 ou 2, dans lequel le dispositif onduleur comprend un premier (9) et un deuxième onduleur (9') à trois branches alimentant respectivement les trois premiers (R, S, T) et trois deuxièmes (U, V, W) bobinages.

4. Procédé selon l'une des revendications précédentes, dans lequel, si aucune combinaison de commande ne permet de maintenir les interrupteurs de deux branches adjacentes dans un état constant sur une période de la modulation à largeur d'impulsion, on sélectionne et on applique la combinaison de commande permettant de maintenir dans un état constant sur une période de la modulation à largeur d'impulsion les interrupteurs de la branche alimentant les bobinages (10) transmettant le courant le plus fort.

5. Procédé selon l'une des revendications précédentes, dans lequel les premiers (R, S, T) et les deuxièmes (U, V, W) bobinages de la machine double triphasée (3) sont décalés d'un angle électrique compris entre 15 et 45°.

6. Procédé selon la revendication 5, dans lequel les premiers (R, S, T) et les deuxièmes (U, V, W) bobinages de la machine double triphasée sont décalés d'un angle de 30° électrique.

7. Procédé selon l'une des revendications précédentes, dans lequel le procédé est mis en oeuvre seulement pour certains régimes moteur de la machine (3).

8. Procédé selon la revendication 7, dans lequel le procédé est mis en oeuvre pour les régimes moteur de la machine inférieurs à 5000 tours/min.

9. Procédé selon la revendication 7 ou 8, dans lequel une commande pleine onde est appliquée pour les régimes moteur supérieurs à 5000 tours/min.

10. Procédé selon l'une des revendications précédentes, dans lequel la machine double triphasée (3) est une machine installée dans un véhicule automobile hybride.

11. Dispositif de commande (1) d'un dispositif onduleur à six branches (B1, B2, B3 B4, B5, B6) alimentant une machine double triphasée (3) comprenant trois premiers bobinages (R, S, T) et trois deuxièmes bobinages (U, V, W), un premier bobinage (R, S, T) étant adjacent respectivement à un deuxième bobinage(U, V, W), le dispositif de commande (1) comprenant des moyens de traitement (12) configurés pour :
- déterminer les commandes par modulation à largeur d'impulsions à appliquer aux branches (B1, B2, B3 B4, B5, B6) du dispositif onduleur en fonction du point de fonctionnement désiré pour la machine,
- à partir des commandes déterminées, déterminer les commandes permettant de maintenir les interrupteurs d'une branche (B1, B2, B3 B4, B5, B6) dans un état constant sur une période de la modulation à largeur d'impulsions en faisant varier de façon proportionnelle les largeurs d'impulsions des commandes associées aux trois premiers bobinages (R, S, T) et aux trois deuxièmes bobinages (U, V, W),
les impulsions appliquées aux différentes branches sont centrées les unes par rapport aux autres,
- le dispositif de commande étant **caractérisés en ce que** les moyens de traitement (12) sont configurés pour :
- sélectionner les combinaisons de commandes permettant de maintenir les interrupteurs de deux branches adjacentes dans un état constant sur une période de la modulation à largeur d'impulsion,
- appliquer l'une des combinaisons sélectionnées,
si plusieurs combinaisons de commandes sont sélectionnées, appliquer la combinaison de commande pour laquelle les branches adjacentes alimentent les bobinages (10) transmettant les courants les plus forts et on maintient leurs interrupteurs dans un état constant sur une période de la modulation à largeur d'impulsion.

12. Véhicule automobile comprenant :
- une machine double triphasée (3) comprenant trois premiers bobinages (R, S, T) et trois deuxièmes bobinages (U, V, W), un premier bobinage (R, S, T) étant adjacent à un deuxième bobinage (U, V, W),
- un dispositif onduleur à six branches alimentant la machine (3),
- un dispositif de commande (1) selon la revendication 11.

## Patentansprüche

1. Verfahren zur Steuerung einer Wechselrichtervorrichtung mit sechs Zweigen (B1, B2, B3, B4, B5, B6), die eine dreiphasige Doppelmaschine (3) mit drei ersten Wicklungen (R, S, T) und drei zweiten Wicklungen (U, V, W) speist, wobei die erste Wicklung (R, S, T) jeweils der zweiten Wicklung (U, V, W) benachbart ist, wobei das Verfahren die folgenden Schritte umfasst:
- es werden die Steuerungen, die auf die Zweige der Wechselrichtervorrichtung anzuwenden sind, in Abhängigkeit vom gewünschten Betriebspunkt für die Maschine (3) durch eine Pulsbreitenmodulation bestimmt,
- anhand der bestimmten Steuerungen werden die Steuerungen bestimmt, die es ermöglichen, die Schalter wenigstens eines Zweigs (B1, B2, B3, B4, B5, B6) über eine Periode der Pulsbreitenmodulation in einem konstanten Zustand zu halten, indem die Impulsbreiten der Steuerungen, die den drei ersten Wicklungen (R, S, T) und den drei zweiten Wicklungen (U, V, W) zugeordnet sind, proportional variiert werden,
- die an die verschiedenen Zweige angelegten Impulse werden relativ zueinander zentriert, wobei das Verfahren **dadurch gekennzeichnet ist, dass**:
- die Kombinationen von Steuerungen ausgewählt werden, die es ermöglichen, die Schalter zweier benachbarter Zweige über eine Periode der Pulsbreitenmodulation in einem konstanten Zustand zu halten,
- eine der ausgewählten Kombinationen angewandt wird, und
wenn mehrere Steuerungen ausgewählt sind, die Steuerungskombination angewandt wird, bei der die benachbarten Zweige die Wicklungen (10) speisen, die die höchsten Ströme übertragen, und ihre Schalter über eine Periode der Pulsbreitenmodulation in einem konstanten Zustand gehalten werden.

2. Verfahren nach Anspruch 1, wobei die Pulsbreitenmodulation, bei der die an die verschiedenen Zweige angelegten Impulse relativ zueinander zentriert werden, eine zentrierte baryzentrische Vektormodulation ist.

3. Verfahren nach Anspruch 1 oder 2, wobei die Wechselrichtervorrichtung einen ersten (9) und einen zweiten Wechselrichter (9') mit drei Zweigen umfasst, die die drei ersten (R, S, T) bzw. drei zweiten (U, V, W) Wicklungen speisen.

4. Verfahren nach einem der vorhergehenden Ansprüche, wobei, wenn keine Steuerungskombination es ermöglicht, die Schalter zweier benachbarter Zweige über eine Periode der Pulsbreitenmodulation in einem konstanten Zustand zu halten, die Steuerungskombination ausgewählt und angewandt wird, die es ermöglicht, die Schalter des Zweigs, der die Wicklungen (10) speist, die den höchsten Strom übertragen, über eine Periode der Pulsbreitenmodulation in einem konstanten Zustand zu halten.

5. Verfahren nach einem der vorhergehenden Ansprüche, wobei die ersten (R, S, T) und die zweiten (U, V, W) Wicklungen der dreiphasigen Doppelmaschine (3) um einen elektrischen Winkel zwischen 15 und 45° versetzt sind.

6. Verfahren nach Anspruch 5, wobei die ersten (R, S, T) und die zweiten (U, V, W) Wicklungen der dreiphasigen Doppelmaschine um einen elektrischen Winkel von 30° versetzt sind.

7. Verfahren nach einem der vorhergehenden Ansprüche, wobei das Verfahren nur für bestimmte Motordrehzahlen der Maschine (3) durchgeführt wird.

8. Verfahren nach Anspruch 7, wobei das Verfahren für die Motordrehzahlen der Maschine unter 5000 U/min durchgeführt wird.

9. Verfahren nach Anspruch 7 oder 8, wobei eine Vollwellensteuerung für die Motordrehzahlen über 5000 U/min angewandt wird.

10. Verfahren nach einem der vorhergehenden Ansprüche, wobei die dreiphasige Doppelmaschine (3) eine Maschine ist, die in ein Hybridkraftfahrzeug eingebaut ist.

11. Verfahren zur Steuerung (1) einer Wechselrichtervorrichtung mit sechs Zweigen (B1, B2, B3, B4, B5, B6), die eine dreiphasige Doppelmaschine (3) mit drei ersten Wicklungen (R, S, T) und drei zweiten Wicklungen (U, V, W) speist, wobei die erste Wicklung (R, S, T) jeweils der zweiten Wicklung (U, V, W) benachbart ist, wobei die Steuerungsvorrichtung (1) Verarbeitungsmittel (12) umfasst, die für Folgendes ausgebildet sind:
- Bestimmen der Steuerungen durch Pulsbreitenmodulation, die auf die Zweige (B1, B2, B3, B4, B5, B6) der Wechselrichtervorrichtung anzuwenden sind, in Abhängigkeit vom gewünschten Betriebspunkt für die Maschine,
- anhand der bestimmten Steuerungen, Bestimmen der Steuerungen, die es ermöglichen, die Schalter eines Zweigs (B1, B2, B3, B4, B5, B6) über eine Periode der Pulsbreitenmodulation in einem konstanten Zustand zu halten, indem die Impulsbreiten der Steuerungen, die den drei ersten Wicklungen (R, S, T) und den drei zweiten Wicklungen (U, V, W) zugeordnet sind, proportional variiert werden,
- die an die verschiedenen Zweige angelegten Impulse werden relativ zueinander zentriert, wobei die Verarbeitungsmittel **dadurch gekennzeichnet sind, dass** sie für Folgendes ausgebildet sind:
- Auswählen der Kombinationen von Steuerungen, die es ermöglichen, die Schalter zweier benachbarter Zweige über eine Periode der Pulsbreitenmodulation in einem konstanten Zustand zu halten,
- Anwenden einer der ausgewählten Kombinationen, wenn mehrere Steuerungskombinationen ausgewählt sind, Anwenden der Steuerungskombination, bei der die benachbarten Zweige die Wicklungen (10) speisen, die die höchsten Ströme übertragen, und Halten ihrer Schalter in einem konstanten Zustand über eine Periode der Pulsbreitenmodulation.

12. Kraftfahrzeug umfassend:
- eine dreiphasige Doppelmaschine (3) mit drei ersten Wicklungen (R, S, T) und drei zweiten Wicklungen (U, V, W), wobei eine erste Wicklung (R, S, T) einer zweiten Wicklung (U, V, W) benachbart ist,
- eine Wechselrichtervorrichtung mit sechs Zweigen, die die Maschine (3) speist,
- eine Steuerungsvorrichtung (1) nach Anspruch 11.

## Claims

1. Method for controlling an inverter device having six branches (B1, B2, B3, B4, B5, B6) supplying power to a three-phase dual machine (3) comprising three first windings (R, S, T) and three second windings (U, V, W), the first winding (R, S, T) being respectively adjacent to the second winding (U, V, W), the method comprising the following steps:
- determining the commands to be applied to the branches of the inverter device on the basis of the desired operating point for the machine (3) through pulse width modulation,
- based on the determined commands, determining the commands that make it possible to keep the switches of at least one branch (B1, B2, B3, B4, B5, B6) in a constant state over a period of the pulse width modulation by proportionally varying the pulse widths of the commands associated with the three first windings (R, S, T) and with the three second windings (U, V, W),
- the pulses applied to the various branches are centred with respect to one another, said method being **characterized by**:
- selecting the combinations of commands that make it possible to keep the switches of two adjacent branches in a constant state over a period of the pulse width modulation,
- applying one of the selected commands, and
if multiple combinations of commands are selected, applying the command combination for which the adjacent branches supply power to the windings (10) transmitting the highest currents and keeping the switches thereof in a constant state over a period of the pulse width modulation.

2. Method according to Claim 1, wherein the pulse width modulation in which the pulses applied to the various branches are centred with respect to one another is a centred barycentric vector modulation.

3. Method according to Claim 1 or 2, wherein the inverter device comprises a first inverter (9) and a second inverter (9') having three branches supplying power respectively to the three first windings (R, S, T) and three second windings (U, V, W).

4. Method according to one of the preceding claims, wherein, if no command combination makes it possible to keep the switches of two adjacent branches in a constant state over a period of the pulse width modulation, the command combination that makes it possible to keep the switches of the branch supplying power to the windings (10) transmitting the highest current in a constant state over a period of the pulse width modulation is selected and applied.

5. Method according to one of the preceding claims, wherein the first windings (R, S, T) and the second windings (U, V, W) of the three-phase dual machine (3) are offset by an electrical angle of between 15 and 45°.

6. Method according to Claim 5, wherein the first windings (R, S, T) and the second windings (U, V, W) of the three-phase dual machine are offset by an electrical angle of 30°.

7. Method according to one of the preceding claims, wherein the method is implemented only for certain motor speeds of the machine (3).

8. Method according to Claim 7, wherein the method is implemented for motor speeds of the machine lower than 5000 rpm.

9. Method according to Claim 7 or 8, wherein a full-wave command is applied for motor speeds greater than 5000 rpm.

10. Method according to one of the preceding claims, wherein the three-phase dual machine (3) is a machine installed in a hybrid motor vehicle.

11. Control device (1) for controlling an inverter device having six branches (B1, B2, B3, B4, B5, B6) supplying power to a three-phase dual machine (3) comprising three first windings (R, S, T) and three second windings (U, V, W), the first winding (R, S, T) being respectively adjacent to the second winding (U, V, W), the control device (1) comprising processing means (12) configured to:
- determine the commands to be applied to the branches (B1, B2, B3, B4, B5, B6) of the inverter device on the basis of the desired operating point for the machine through pulse width modulation,
- based on the determined commands, determine the commands that make it possible to keep the switches of a branch (B1, B2, B3, B4, B5, B6) in a constant state over a period of the pulse width modulation by proportionally varying the pulse widths of the commands associated with the three first windings (R, S, T) and with the three second windings (U, V, W),
- the pulses applied to the various branches are centred with respect to one another, said processing means being **characterized in that** they are configured to:
- select the combinations of commands that make it possible to keep the switches of two adjacent branches in a constant state over a period of the pulse width modulation,
- apply one of the selected commands, and
if multiple combinations of commands are selected, apply the command combination for which the adjacent branches supply power to the windings (10) transmitting the highest currents and the switches thereof are kept in a constant state over a period of the pulse width modulation.

12. Motor vehicle comprising:
- a three-phase dual machine (3) comprising three first windings (R, S, T) and three second windings (U, V, W), a first winding (R, S, T) being adjacent to a second winding (U, V, W),
- an inverter device having six branches supplying power to the machine (3),
- a control device (1) according to Claim 11.
